# EUROPEAN PATENT SPECIFICATION

(11) **EP 2 425 054 B1**
(45) Date of publication and mention of the grant of the patent: **28.01.2015**
(21) Application number: 10769379.8
(22) Date of filing: 29.04.2010
(51) Int. Cl.: D21F 1/00, D21G 5/00, E04G 1/15, F16P 1/00, D21F 3/00, D21F 5/00

(54) **SERVICE PLATFORM ARRANGEMENT FOR A FIBER WEB MACHINE**
BEDIENBÜHNENANORDNUNG FÜR EINE FASERVLIESMASCHINE
SYSTÈME DE PLATE-FORME D'ENTRETIEN POUR MACHINE À TISSER

(30) Priority: 30.04.2009 FI 20095487
(43) Date of publication of application: 07.03.2012
(73) Proprietor: Valmet Technologies, Inc., 02150 Espoo (FI)
(72) Inventor: VÄÄTÄNEN, Risto, FI-04430 Järvenpää (FI); VENETJOKI, Petteri, FI-00700 Helsinki (FI)
(74) Representative: TBK
(86) International application number: PCT/FI2010/050347
(87) International publication number: WO 2010/125245

(56) References cited:
- EP-A1- 1 160 500
- EP-A1- 1 160 500
- WO-A1-02/35140
- WO-A1-2007/080215
- WO-A1-2007/080215

## Description

The present invention relates to a service platform arrangement for a fiber web machine according to the preamble of patent claim 1.

In fiber web machines, there are various partial processes associated with the web formation and the treatment of the web and the components of the fiber web machine performing such processes have been placed optimally in relation to each other in view of the progress of the process. The components of the fiber web machine include also additional apparatus such as fabric reconditioning equipment and measuring equipment etc. It is essential for the operation and service of the fiber web machine that access to the various components has been provided. Further, a fiber web machine comprises service platforms. However, the platforms have often been designed and build separately for each partial process and thus moving between the partial processes may be cumbersome for the personnel.

The prior art service platforms of fiber web machines are typically walkways provided in support of brackets in the body of the fiber web machine. This kind of an arrangement is often slow to set up due to among other thing the large number of separate components. Further, moving on the prior art service platforms of a fiber web machine often requires going up and down several times.

It is known as such to use glass in railings. For example publications US4054268, US4841697 and US6964410 disclose various railing solutions using glass as the railing material. These disclose fixing the glass at its edge with compression joints of different kind to an elongated securing member with which the railing is secured to the support structure.

Publication WO 2007144460 discloses a casing of a fiber web machine, utilizing thermal glass elements.

WO 02/35140 A1 discloses a service platform arrangement according to the preamble of claim 1.

The casing of a fiber web machine is typically arranged among other things in order to maintain appropriate process conditions of the machine and on the other hand to preserve the working conditions pleasant and good. The casing, however, always has to some extent a harmful influence on the monitoring of the process and also the smooth progress of the service work. Further, there are points where a complete casing is not always technically necessary. For example at the wire section of a fiber web machine one of the most prominent work safety problem is noise to which the personnel is exposed.

An object of the invention is to provide a service platform arrangement for a fiber web machine which among other things permits more efficient moving between the various components of the fiber web machine and which facilitates the daily work of the personnel.

The objects of the invention are obtained mainly by means of a service platform arrangement, comprising at least a walkway and a railing disposed in connection with each other so that the railing extends from the walkway to a first direction, and further comprising a closed protecting structure provided in connection with the walkway in a horizontal level essentially at the railing so that the protecting structure extends from the walkway to a second direction, which is essentially the opposite direction in relation to the first direction. More precisely expressed, the railing extends upwards and the protecting structure downwards.

Preferably the protecting structure has been provided to extend between the walkway of the service platform arrangement and another walkway under it whereby it essentially closes the space mentioned. According to a preferred embodiment of the invention the other walkway mentioned is the machine level of the fiber web machine.

According to a preferred embodiment of the invention there are support and/or guiding means for the protecting structure disposed essentially directly under the outer edge of the walkway seen from the machine side. This allows providing the support and/or guiding means mentioned to be provided to cooperate with the service platform arrangement when providing support and/or guiding for the protecting structure.

According to an embodiment of the invention the protecting structure preferably comprises several wall elements supported movably by the service platform arrangement and the service platform.

According to an embodiment of the invention the protecting structure preferably comprises wall elements provided movable in connection with the service platform arrangement and preferably movably secured to the service platform arrangement.

The service platform arrangement comprises means for moving the wall elements in the machine direction and preferably comprising a guide or a corresponding element.

According to a preferred embodiment the service platform arrangement further comprises means for locking the wall elements to the service platform arrangement.

According to a preferred embodiment the service platform arrangement has been disposed to extend to the area of at least two different machine sections essentially at the same horizontal level.

The objects of the invention are obtained also with a fiber web machine comprising a service platform arrangement which comprises at least a walkway and a railing disposed in connection with each other so that the railing extends from the walkway to a first direction, and where the service platform comprises an essentially closed protecting structure provided in connection with the walkway at the horizontal level essentially at the railing so that the protecting structure extends from the walkway to a second direction, which is essentially the opposite direction in relation to the first direction.

The additional other characteristic features of the invention are disclosed in the appended patent claims and the following description of the embodiments of the drawings.

The invention and its operation are explained below with reference to the accompanying schematic drawings, in which
Figure 1 illustrates schematically an embodiment of a fiber web machine and a service platform arrangement according to the invention;
Figure 2 illustrated schematically Figure 1 seen in the direction II;
Figure 3 illustrates a wall element of the set of walls of Figure 1;
Figure 4 illustrates a situation in the use of an embodiment of the invention;
Figure 5 illustrates more closely an embodiment of the service platform arrangement according to the invention; and
Figure 6 illustrates more closely another embodiment of the service platform arrangement according to the invention.

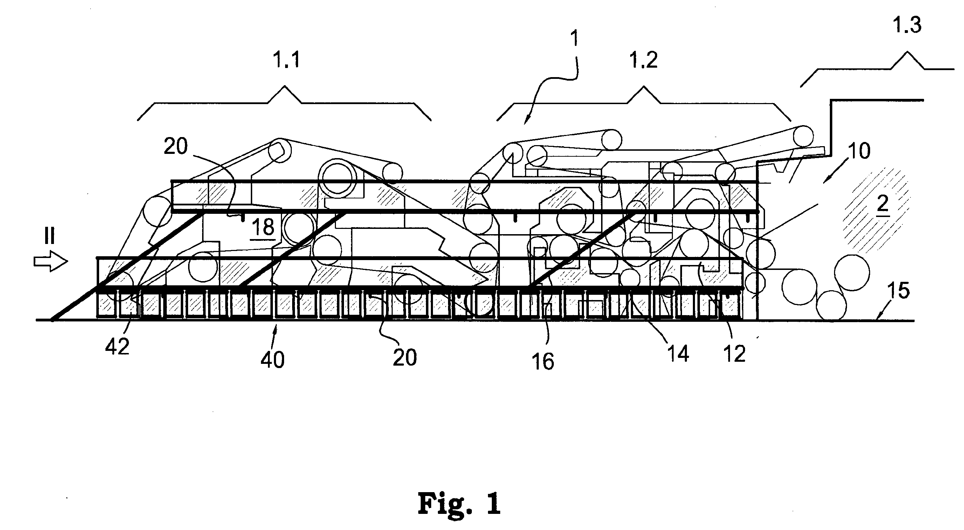

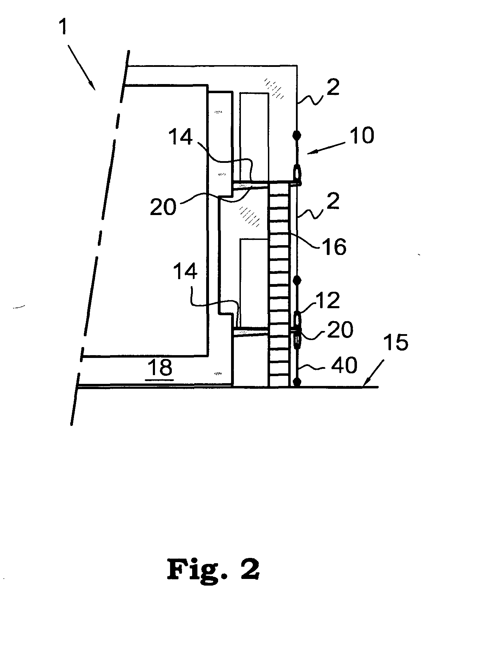

Figure 1 illustrates schematically an embodiment of a fiber web machine 1 according to the invention and a service platform arrangement 10 connected with it. Figure 2 illustrates schematically the fiber web machine of Figure 1 as seen in direction II. The so-called forming section 1.1 and the press section 1.2 and partly the drying section 1.3 have been illustrated here by way of an example, only. The fiber web machine has been provided with a service platform arrangement 10 comprising at least a railing 12 and a walkway 14. The service platform arrangement has been disposed to extend to the area of at least two different machine sections 1.1, 1.2 of the fiber web machine 1 essentially at the same horizontal level. In this way the service platform arrangement continues essentially continuous and essentially at the same horizontal level between at least two different machine sections. Thus, when moving between machine sections the use of stairs is minimized and thus operating the fiber web machine is facilitated and more efficient and safer than before. In the embodiment illustrated in Figure 1 the fiber web machine comprises two superimposed service platform arrangements 10 at different vertical levels. Access to the service platform arrangements and moving between the upper and the lower service platform arrangement is provided via stairs 16. Both the service platform arrangements extend essentially linear to the area of at least two machine sections. The service platform arrangements are essentially horizontal. In some applications a service platform arrangement with a very little rise (or decline) may also be used. Then the rise (or decline) is preferably at the most 1:8.

Figure 1 further illustrates a solution according to an embodiment of the invention where the fiber web machine has been partly and openably isolated from the walking area beside the fiber web machine by means of the service platform arrangement according to the invention. The railing of the service platform arrangement 10 extends from the walkway 14 to a first direction; then the service platform arrangement 10 further comprises an essentially closed protecting structure 40 provided in connection with the walkway so that it extends from the walkway 14 to a second, i.e. different direction that the railing 12, which extends to the first direction. The second direction is essentially opposite to the first direction. More precisely expressed, the first direction is essentially upwards and the second direction essentially downwards. The protecting structure 40 has been disposed essentially directly under the railing as a continuation of it.

The walking area mentioned is preferably the so-called tending side machine level 15 of the fiber web machine. The machine level of a fiber web machine is the most important work area used for servicing and monitoring the machine and the process. In Figure 1 the next service platform arrangement 10 upwards from the machine level in the vertical direction has been provided with a set of walls 40 between the machine level and the service platform arrangement. In other words the fiber web machine comprises a protecting structure comprising a set of walls between the machine level and the next walkway above it. Here the reference number 40 refers to both the protecting structure and the set of walls. The set of walls 40 has been provided to essentially cover direct connection from the fiber web machine to the working zone on the machine level in the vicinity of the fiber web machine.

The service platform arrangement has been particularly provided so that it extends at the fiber web machine to the area of at least both the forming section and the press section. Then the usability of the set of walls 40 is especially good among other things because the long uniform protecting structure forms also a space to move aside an adequate number wall elements of the set of walls for the time of service measures.

The set of walls is preferably composed of several individual walls 42, which have been secured preferably in a movable manner in connection with the first service platform arrangement above the machine level.

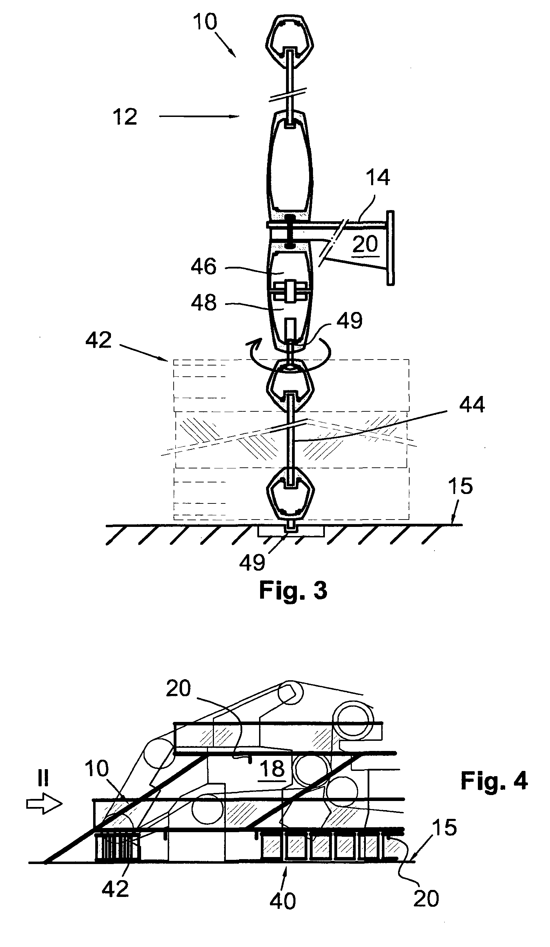

Figure 3 illustrates schematically an individual wall 42 of the set of walls of Figure 1 and an embodiment of a securing arrangement of the set of walls. The wall preferably comprises a transparent panel structure 44 such as a glass panel which constitutes most of the area of the wall. In this embodiment the wall is preferably suspended via a suspension means 48 from a guide 46 provided in the service platform arrangement. The service platform arrangement comprises means for moving and centering the walls. The securing arrangement of the set of walls in the service platform arrangement allows moving each wall in the guide 46 and further the suspension means comprises means for turning the wall around a vertical turning axis. The suspension means 48 comprises a securing element 49 by means of which the wall 46 is turnable in vertical direction. Although for the sake of clarity this has not been illustrated here, the service platform arrangement comprises a locking mechanism with which the walls may be reliably locked in certain position, both in a certain turning position and in a certain position in the guide 46 in the machine direction. In this way the area covered with the walls can be varied by moving the walls in relation to each other in the direction of the fiber web machine and at the same time turning each wall so that they overlap each other. In an extreme situation the walls may be turned even to a fully transverse position and packed one after the other, in other words centered to a certain area whereby access to the fiber web machine is as open as possible.

Figure 4 illustrates by way of an example a situation in which a part of the walls 42 have been centered at the starting end of the forming section by turning and moving the walls. Thus, a service measure at the machine level may be performed according to the invention so that walls 42 serving as an essentially machine direction protecting structure are turned in vertical direction and moved in machine direction so that the walls at least partly overlap each other and thus allow access to the vicinity of the machine on the machine level.

Figure 3 further illustrates how a control element 49 such as a guide or a corresponding member has been provided between the machine level and the walls 42 to support the lower part of the walls in a controlled way. This kind of an arrangement stops locally the noise, possible splashes, heat etc. of the fiber web machine from advancing to the machine level whereby the effect is directed exactly to the area where for example the operating personnel moves most. When the wall is transparent the monitoring possibilities of the operation of the machine is maintained particularly good.

Figure 2 illustrates further that the railings of the superimposed service platform arrangements and the protecting structure 40 have preferably been arranged essentially at the same vertical plane, in other words substantially at one and the same transverse distance from the machine longitudinal center line. It is clear that both the railings and the protecting structure may be for example slightly inclined in the vertical direction although that has not been illustrated here. Preferably also the vertical wall 2 of the casing, i.e. the hood of the fiber web machine drying section following the service platform arrangements in the machine direction, in other words the outer wall of the hood, is at this plane. Then the vertical wall of the hood and the railings and the protecting structure 40 of the service platform arrangements of the press and drying sections run via the same vertical plane and thus the side line of the fiber web machine is essentially straight. This kind of an arrangement facilitates and makes more efficient the use of the machine hall of the fiber web machine.

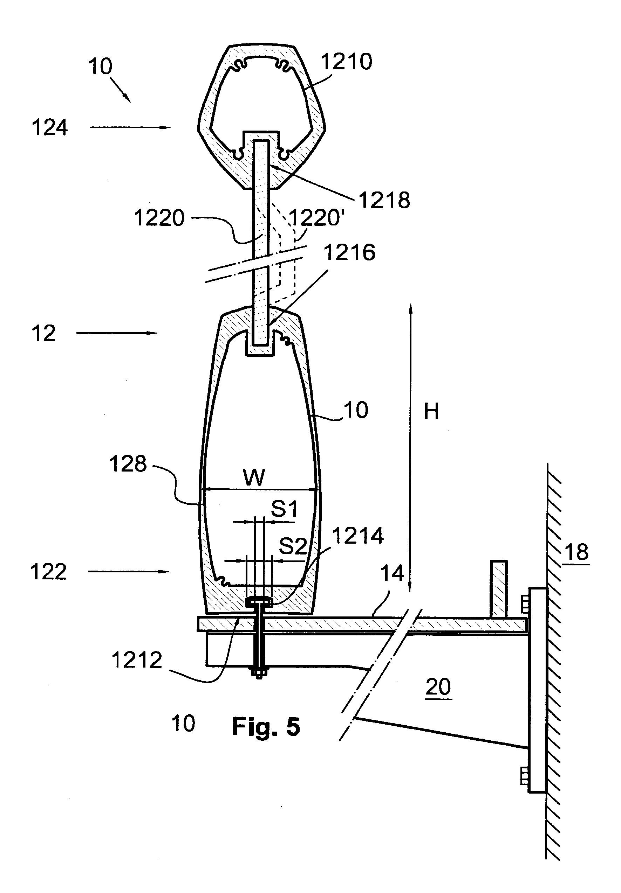

According to an embodiment of the invention, the railing 12 of the service platform arrangement is preferably a so-called supporting structure whereby the supporting of the service platform arrangement is carried out mainly by means of the railing. Figure 5 illustrates more closely the service platform arrangement 10 of Figure 3, for the clarity without the protecting structure. The service platform arrangement 10 is supported on the body or other structure 18 of the fiber web machine by means of brackets 20 transverse to fiber web machine, the brackets being secured at one of their ends to the body or other structure of the fiber web machine and at their other end to the railing 12. Also the walkway 14 of the service platform arrangement is supported to the railing. The railing 12 comprises at its first side 122 a support girder 128 and at its other side 124 a handrail 1210. The first side means the bottom edge of the railing when the service platform has been assembled in its place and the other side the top edge of the railing and thus they are the opposite sides of the railing.

The support girder extends in the longitudinal direction of the railing 12 along the entire length of the railing but it may be composed of more than one parts connected to each other. Preferably the support girder is essentially longer in the vertical direction H of the railing (when assembled for use) than in the direction W transverse to the vertical direction.

Both the support girder 128 and the handrail 1210 are preferably so-called profile bars with a hollow inside and manufactured by extrusion of light metal. The support girder has been provided at its first side 1212 with a securing element comprising a recess 1214 in the direction of the support girder, the opening width S1 of the recess being smaller than its maximum width S2. Here the width means the average width. By means of the recess, both the walkway 14 and the brackets 20 may be secured to the support girder with a bolt connection. The recess, which may also be called a groove, in the direction of the support girder can accept the nut or the corresponding element used in the securing. The collars of the recess in turn detain the nut or the corresponding element. The walkway may be secured to the support girder with a relatively dense spacing whereby also a bracket 20 is secured to the support girder only in connection with certain bolt connections. The bracket 20 has been secured at its other end to the body 18.

There is a groove 1216 provided in the support girder at the side opposite to the first side 1212 and extending along the entire length of the support girder. In the same way the hand rail includes a groove 1218. The railing further comprises an intermediate member 1220 secured in the groove of the support girder and in the groove of the hand rail. The intermediate member is in the embodiment of Figure 3 a transparent panel such as a glass panel preferably secured with adhesive to said grooves. The panel extends preferably along to whole length of the railing as a solid piece. This kind of a railing, in addition to being self-supporting, also serves as an efficient noise, moisture and heat barrier from the fiber web machine to the machine hall.

The intermediate member may be implemented also in other ways 1120'. The plate-like structure may be manufactured also of other materials such as aluminum or other light metals. The structure may also be layered whereby its noise and heat isolation capacity are improved as well as its stiffness. According to an embodiment the intermediate member may also be composed of a number of separate elements which may also be called railing poles. Further, the structure may be different from a plane and it may be a formed structure comprising projections extending from the surface. The structure may also be plane-like and comprise combinations of different materials such as various combinations of glass and aluminum panels. In any case, the structure is secured to the hand rail and the support girder via a groove in the longitudinal direction of the railing.

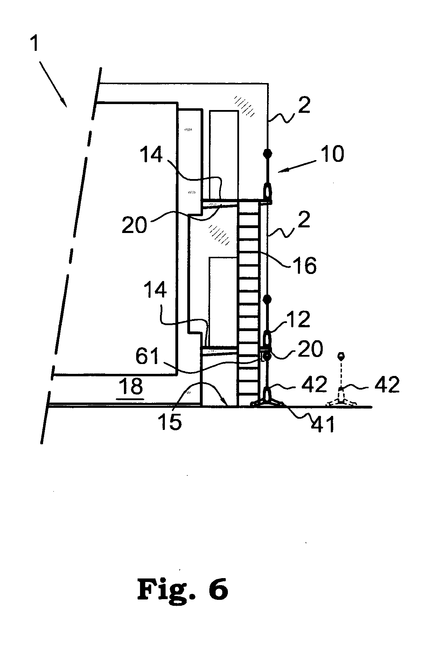

Figure 6 illustrates a service platform arrangement of a fiber web machine according to another embodiment of the invention where the walls 42 are independently supportable on the machine level and are at least partly supported and/or locked to the service platform arrangement. In the arrangement of Figure 6 for example each wall is separately movable on wheels 41 on the machine level which has been illustrated with a dashed line. The service platform arrangement preferably comprises means 61 for locking the wall to form a protecting structure 60 between the service platform and the machine level. Then the walls may be placed locally for example between a component creating noise and the walking route of the monitoring and service personnel whereby the personnel is less exposed. The essentially transparent noise control elements, i.e. the walls, improve the noise control of the fiber web machine without essentially increasing the surfaces impairing the visibility or making the service/monitoring more cumbersome.

It must be noted that only a few most preferred embodiments of the invention have been presented above. Depending on the matrix used the details of the manufacture of the composite structure may vary. Thus, it is clear that the invention is not limited to the embodiments presented above but it may be modified in many ways within the scope defined by the appended patent claims. It is possible to use the features described in conjunction with the different embodiments in conjunction with other embodiments as well and/or to make various combinations of the described features within the frame of the basic idea of the invention, if so desired and if technically feasible.

## Claims

1. A service platform arrangement (10) for a fiber web machine, including at least a walkway (14) and a railing (12) provided in connection with each other so that the railing extends from the walkway to a first direction, **characterized in that** the service platform arrangement comprises an essentially closed protecting structure (40) provided in connection with the walkway in a horizontal level essentially at the railing so that it extends from the walkway to a second direction, which is essentially the opposite direction in relation to the first direction.

2. A service platform arrangement of a fiber web machine according to claim 1, **characterized in that** the protecting structure (40) has been arranged to extend between the walkway (14) of the service platform arrangement and another walkway under it.

3. A service platform arrangement of a fiber web machine according to claim 2, **characterized in that** said other walkway is the machine level (15) of the fiber web machine.

4. A service platform arrangement of a fiber web machine according to claim 3, **characterized in that** there are support and/or guiding means for the protecting structure (40) disposed essentially directly under the outer edge of the walkway seen from the fiber web machine.

5. A service platform arrangement of a fiber web machine according to claim 1 or 4, **characterized in that** the protecting structure includes several individual walls (42) provided movable in support of the service platform arrangement and the service platform

6. A service platform arrangement of a fiber web machine according to claim 1 or 4, **characterized in that** the protecting structure includes several individual walls (42) provided movable in connection with the service platform arrangement.

7. A service platform arrangement of a fiber web machine according to claim 6, **characterized in that** the service platform arrangement includes means for transferring the walls in the machine direction.

8. A service platform arrangement of a fiber web machine according to claim 6, **characterized in that** the service platform arrangement includes means for locking the walls to the service platform arrangement.

9. A service platform arrangement of a fiber web machine according to any of the preceding claims, **characterized in that** the service platform arrangement has been disposed to extend to the area of at least two different machine sections essentially at the same horizontal level.

10. A fiber web machine, **characterized in that** it includes the service platform arrangement according to any of the preceding claims.

## Patentansprüche

1. Serviceplattformanordnung (10) für eine Faserbahnmaschine mit zumindest einem Laufsteg (14) und einem Geländer (12), die in Verbindung zueinander so vorgesehen sind, dass sich das Geländer von dem Laufsteg in einer ersten Richtung erstreckt, **dadurch gekennzeichnet, dass** die Serviceplattformanordnung eine im Wesentlichen geschlossene Schutzstruktur (40) aufweist, die in Verbindung mit dem Laufsteg in einem horizontalen Niveau im Wesentlichen an dem Geländer so vorgesehen ist, dass sie sich von dem Laufsteg in einer zweiten Richtung erstreckt, die im Wesentlichen die entgegengesetzte Richtung relativ zu der ersten Richtung ist.

2. Serviceplattformanordnung einer Faserbahnmaschine gemäß Anspruch 1, **dadurch gekennzeichnet, dass** die Schutzstruktur (40) so angeordnet ist, dass sie sich zwischen dem Laufsteg (14) der Serviceplattformanordnung und einem anderen Laufsteg unter dieser erstreckt.

3. Serviceplattformanordnung einer Faserbahnmaschine gemäß Anspruch 2, **dadurch gekennzeichnet, dass** der andere Laufsteg das Maschinenniveau (15) der Faserbahnmaschine ist.

4. Serviceplattformanordnung einer Faserbahnmaschine gemäß Anspruch 3, **dadurch gekennzeichnet, dass** Stütz- und/oder Führungseinrichtungen für die Schutzstruktur (40) vorhanden sind, die im Wesentlichen direkt unter dem Außenrand des Laufstegs unter Betrachtung von der Faserbahnmaschine angeordnet sind.

5. Serviceplattformanordnung einer Faserbahnmaschine gemäß Anspruch 1 oder 4, **dadurch gekennzeichnet, dass** die Schutzstruktur mehrere einzelne Wände (42) hat, die beweglich beim Stützen der Serviceplattformanordnung und der Serviceplattform vorgesehen sind.

6. Serviceplattformanordnung einer Faserbahnmaschine gemäß Anspruch 1 oder 4, **dadurch gekennzeichnet, dass** die Schutzstruktur mehrere einzelne Wände (42) hat, die beweglich in Verbindung mit der Serviceplattformanordnung vorgesehen sind.

7. Serviceplattformanordnung einer Faserbahnmaschine gemäß Anspruch 6, **dadurch gekennzeichnet, dass** die Serviceplattformanordnung eine Einrichtung zum Befördern der Wände in der Maschinenrichtung hat.

8. Serviceplattformanordnung einer Faserbahnmaschine gemäß Anspruch 6, **dadurch gekennzeichnet, dass** die Serviceplattformanordnung eine Einrichtung zum Arretieren der Wände an der Serviceplattformanordnung hat.

9. Serviceplattformanordnung einer Faserbahnmaschine gemäß einem der vorherigen Ansprüche, **dadurch gekennzeichnet, dass** die Serviceplattformanordnung so angeordnet ist, dass sie sich zu dem Bereich von zumindest zwei verschiedenen Maschinenabschnitten im Wesentlichen an dem gleichen horizontalen Niveau erstreckt.

10. Faserbahnmaschine, **dadurch gekennzeichnet, dass** sie die Serviceplattformanordnung gemäß einem der vorherigen Ansprüche aufweist.

## Revendications

1. Agencement de plateforme d'entretien (10) pour une machine à bande fibreuse, comportant au moins une passerelle (14) et une rambarde (12) prévues en liaison l'une avec l'autre de sorte que la rambarde s'étende depuis la passerelle dans une première direction, **caractérisé en ce que** l'agencement de plateforme d'entretien comprend une structure de protection essentiellement fermée (40) prévue en liaison avec la passerelle à un niveau horizontal essentiellement au niveau de la rambarde de sorte qu'elle s'étende depuis la passerelle dans une deuxième direction, qui est essentiellement la direction opposée à la première direction.

2. Agencement de plateforme d'entretien d'une machine à bande fibreuse selon la revendication 1, **caractérisé en ce que** la structure de protection (40) a été agencée de manière à s'étendre entre la passerelle (14) de l'agencement de plateforme d'entretien et une autre passerelle en dessous de celle-ci.

3. Agencement de plateforme d'entretien d'une machine à bande fibreuse selon la revendication 2, **caractérisé en ce que** ladite autre passerelle est le niveau de machine (15) de la machine à bande fibreuse.

4. Agencement de plateforme d'entretien d'une machine à bande fibreuse selon la revendication 3, **caractérisé en ce qu'**il existe des moyens de support et/ou de guidage pour la structure de protection (40) disposés essentiellement directement sous le bord externe de la passerelle dans une vue à partir de la machine à bande fibreuse.

5. Agencement de plateforme d'entretien d'une machine à bande fibreuse selon la revendication 1 ou 4, **caractérisé en ce que** la structure de protection comporte plusieurs parois individuelles (42) prévues de manière mobile en étant supportées par l'agencement de plateforme d'entretien et de la plateforme d'entretien.

6. Agencement de plateforme d'entretien d'une machine à bande fibreuse selon la revendication 1 ou 4, **caractérisé en ce que** la structure de protection comporte plusieurs parois individuelles (42) prévues de manière mobile en liaison avec l'agencement de plateforme d'entretien.

7. Agencement de plateforme d'entretien d'une machine à bande fibreuse selon la revendication 6, **caractérisé en ce que** l'agencement de plateforme d'entretien comporte des moyens pour transférer les parois dans la direction de la machine.

8. Agencement de plateforme d'entretien d'une machine à bande fibreuse selon la revendication 6, **caractérisé en ce que** l'agencement de plateforme d'entretien comporte des moyens pour verrouiller les parois à l'agencement de plateforme d'entretien.

9. Agencement de plateforme d'entretien d'une machine à bande fibreuse selon l'une des revendications précédentes, **caractérisé en ce que** l'agencement de plateforme d'entretien a été disposé de manière à s'étendre vers la zone d'au moins deux différentes sections de machine essentiellement au même niveau horizontal.

10. Machine à bande fibreuse, **caractérisée en ce qu'**elle comporte l'agencement de plateforme d'entretien selon l'une des revendications précédentes.
